# EUROPEAN PATENT APPLICATION

(11) **EP 4 836 044 A1**
(43) Date of publication of application: **04.11.2026**
(21) Application number: 24928030.6
(22) Date of filing: 22.08.2024
(51) Int. Cl.: H01M 10/04, H01M 4/02, H01M 10/0587

(54) **BATTERY CELL AND PREPARATION METHOD, BATTERY, AND ELECTRICAL DEVICE**

(30) Priority: 06.03.2024 CN 202410254159
(71) Applicant: Contemporary Amperex Technology Co., Limited, Ningde, Fujian 352100 (CN)
(72) Inventor: GUO, Xin, Ningde, Fujian 352100 (CN)
(74) Representative: Kraus & Lederer PartGmbB
(86) International application number: PCT/CN2024/113904
(87) International publication number: WO 2025/185099

(57) **Abstract**

The present application relates to a battery cell and a preparation method, a battery, and an electrical device. An electrode assembly comprises an electrode sheet and a plurality of bosses; the electrode sheet is of a wound structure; and the plurality of bosses are at least partially arranged on the electrode sheet in the winding direction of the electrode sheet. The bosses in the present application are arranged to achieve a supporting effect between two adjacent layers of the wound structure, and facilitate an increase in a distance between two adjacent layers of the wound structure, thereby enabling two adjacent layers of the wound structure to be looser, and facilitating reduction of the occurrence of breakage of the electrode sheet.

## Description

The present application claims priority to Chinese Patent Application No. 202410254159.X, filed with the China National Intellectual Property Administration on March 6, 2024 and entitled "Battery Cell and Preparation Method, Battery, and Electrical Device", which is incorporated herein by reference in its entirety.

### TECHNICAL FIELD

The present application belongs to the field of new energy technologies, and in particular, to a battery and an electrical device.

### BACKGROUND

A battery cell is an electrical energy input/output unit in a battery, and the battery cell generally includes an electrode sheet.

In related technologies, the electrode sheet needs to be configured in a wound state. However, after the electrode sheet is wound, an inner ring of the electrode sheet is prone to collapse, and an outer ring of the electrode sheet is prone to breakage. In view of this, how to improve structural stability of the electrode sheet in the battery cell is a technical problem that urgently needs to be resolved.

### SUMMARY

An objective of embodiments of the present application is: to provide a battery cell and a preparation method, a battery and an electrical device, in order to solve a technical problem of poor structural stability of the electrode sheet.

### TECHNICAL SOLUTION

Embodiments of the present application adopt the technical solutions below:

According to a first aspect, the embodiments of the present application provide a battery cell, comprising an electrode assembly. The electrode assembly comprises:
an electrode sheet, wherein the electrode sheet is of a wound structure; and
a plurality of bosses, wherein the plurality of bosses are at least partially disposed on the electrode sheet in a winding direction of the electrode sheet.

In the electrode sheet provided by the embodiments of the present application, by providing the plurality of bosses on the electrode sheet, after the electrode sheet is wound, the bosses can achieve a supporting effect between two adjacent layers of the wound structure, and facilitate an increase in a distance between two adjacent layers of the wound structure. That is, the plurality of bosses can enable two adjacent layers of the wound structure to be looser, to facilitate reduction of the occurrence of breakage of the electrode sheet.

In some embodiments, the wound structure has an inner layer and an outer layer, and the plurality of bosses are disposed on the inner layer. In this way, the bosses can form a support between the inner layer and an adjacent layer thereof to ensure a spacing between the inner layer and the adjacent layer. That is, it can help enable the inner layer of the wound structure and the adjacent layer to be looser, thereby facilitating reduction of a risk of collapse of the inner layer of the electrode sheet.

In some embodiments, the boss is of a deformable structure. In this way, in a process of forming the wound structure, the adjacent layer of the inner layer compresses the bosses on the inner layer, and as a quantity of wound layers increases, a compressive force of the adjacent layer on the bosses increases. In this process, the bosses gradually collapse and deform, so that the inner layer and the adjacent layer thereof change from loose to tight.

In some embodiments, in the winding direction of the electrode sheet, heights of the plurality of bosses in the thickness direction of the electrode sheet gradually decrease. In this way, it helps ensure that the boss on the inner layer and a boss on the outer layer have the same height after deformation, thereby helping ensure that the inner layer and the outer layer have the same tightness, or that the inner layer is looser than the outer layer, which facilitates reduction of a risk of collapse of the inner layer of the electrode sheet.

In some embodiments, the plurality of bosses are spaced apart in the winding direction of the electrode sheet. In this way, the plurality of bosses are spaced apart, which can enable two adjacent layers of the wound structure to be looser, to facilitate reduction of the occurrence of breakage of the electrode sheet.

In some embodiments, at least three bosses are provided on each layer of electrode sheet in the winding direction of the electrode sheet, and a distance between two adjacent bosses gradually increases in the winding direction of the electrode sheet. In this way, the inner layer of the wound structure has more densely packed bosses than the outer layer, which helps offset some of the compressive force exerted on the inner layer by the outer layer, thereby helping improve support stability of the inner layer.

In some embodiments, at least some bosses in the plurality of bosses are connected to form a protruding strip, and the height of the protruding strip gradually decreases in the winding direction of the electrode sheet.

In some embodiments, the plurality of bosses are arranged in the winding direction to form a first boss column and a second boss column, the first boss column and the second boss column are alternately arranged in the width direction of the electrode sheet, and bosses in the first boss column and bosses in the second boss column are staggered in the width direction. In this way, it helps improve consistency of a spacing between two adjacent layers of the wound structure in the width direction of the electrode sheet, thereby helping improve structural stability of the electrode sheet after being wound.

In some embodiments, the bosses in the first boss column and the bosses in the second boss column are arranged in a grid structure, and a shape of a minimum grid unit of the grid structure is an isosceles triangle. In this way, it helps further improve support stability of the first boss column and the second boss column to other layer structures.

In some embodiments, the electrode sheet is configured such that bosses in the same layer of the wound structure have the same height.

In some embodiments, the bosses are disposed on a side of the electrode sheet, and a groove is provided at a position on the other side of the electrode sheet corresponding to the bosses. In this way, it facilitates direct forming of a boss structure on the electrode sheet. For example, a groove can be pressed into one side of the electrode sheet by using a pressing roller, while a boss is formed on the other side.

In some embodiments, there are a plurality of grooves, and the grooves are disposed corresponding to the bosses.

In some embodiments, the boss has an abutting surface disposed facing away from the electrode sheet, and at least a portion of the abutting surface is a curved surface. In this way, by providing the curved surface, it helps reduce a pressure of the boss on the other layer of the wound structure to help improve structural strength of the wound structure.

In some embodiments, the curved surface is an arc surface.

In some embodiments, the electrode sheet is provided with a preset region for arranging the boss, and a spacing region is provided between the boundary of the preset region and the boundary of the electrode sheet. In this way, by reserving the spacing region for cutting, it helps avoid generating more metal burrs when cutting the electrode sheet.

According to a second aspect, the present application further provides a preparation method for a battery cell. The preparation method comprises:
providing an electrode sheet; and
using an embossing roller to roll on one side of the electrode sheet and pressing a plurality of grooves on the electrode sheet to form a boss on the other side of the electrode sheet facing away from the grooves, wherein a pressure of the embossing roller on the electrode sheet gradually increases or decreases in a rolling direction of the embossing roller on the electrode sheet.

In some embodiments, the step of providing a plurality of grooves on one side of the electrode sheet to form bosses on the other side of the electrode sheet facing away from the grooves comprises:
using an embossing roller to roll on one side of the electrode sheet and pressing a plurality of grooves on the electrode sheet, wherein a pressure of the embossing roller on the electrode sheet gradually increases or decreases in a rolling direction of the embossing roller on the electrode sheet.

In some embodiments, the electrode sheet is configured such that, in a direction from an inner layer to an outer layer of a wound structure, heights of a plurality of bosses in the thickness direction of the electrode sheet decrease.

According to a third aspect, the present application further provides a battery, comprising the battery cell described above.

According to a fourth aspect, the present application further provides an electrical device, comprising the battery described above.

The above description is merely an overview of the technical solutions of the present application. For a clearer understanding of the technical means of the present application, the present application can be carried out in accordance with the content of the description, and in order to make the above and other objectives, characteristics, and advantages of the present application apparent and comprehensible, specific embodiments of the present application are described below.

### BRIEF DESCRIPTION OF THE DRAWINGS

Various other advantages and benefits will become clear to a person of ordinary skill in the art upon reading the detailed description of the preferred implementations below. The accompanying drawings are used only for the purpose of illustrating the preferred implementations and are not to be construed as limitations on the present application. Moreover, the same reference numerals are used to denote the same components throughout the accompanying drawings. In the accompanying drawings:
FIG. 1 is a schematic structural diagram of a vehicle according to some embodiments of the present application;
FIG. 2 is a schematic structural diagram of a battery according to some embodiments of the present application;
FIG. 3 is a schematic structural diagram of a battery cell according to some embodiments of the present application;
FIG. 4 is a schematic structural diagram of an electrode sheet according to some embodiments of the present application;
FIG. 5 is a schematic structural diagram of an electrode sheet according to some other embodiments of the present application;
FIG. 6 is an enlarged schematic diagram of part A in FIG. 5 according to some embodiments of the present application;
FIG. 7 is a schematic structural diagram of a battery cell according to some other embodiments of the present application;
FIG. 8 is a schematic structural diagram of an electrode sheet according to some embodiments of the present application; and
FIG. 9 is a step diagram of a preparation method for an electrode sheet according to some embodiments of the present application.

Reference numerals in specific implementations are as follows:
100. Vehicle; 110. Battery; 120. Controller; 130. Motor; 10. Box body; 11. First portion; 12. Second portion; 20. Battery cell; 200. Electrode assembly; 200a. Positive electrode sheet; 200b. Negative electrode sheet; 210. Electrode sheet; 211. Preset region; 212. Spacing region; 213. Inner layer; 214. Outer layer; 220. Boss; 230. Groove; 240. First boss column; 250. Second boss column; 300. Separator; a. Winding direction; b. Width direction; and c. Length direction.

### DETAILED DESCRIPTION OF PREFERRED EMBODIMENTS

Embodiments of the technical solutions of the present application are described in detail below with reference to the drawings. The following embodiments are only used to more clearly illustrate the technical solutions of the present application, and thus are used as examples only, and are not intended to limit the protection range of the present application.

Unless otherwise defined, all technical and scientific terms used herein have the same meaning as commonly understood by those skilled in the art to which the present application belongs. The terms used in the specification of the present application herein are merely for the purpose of describing specific embodiments and are not intended to limit the present application. The terms "include", "be provided with", and any other variants thereof in the specification, claims, and accompanying drawings of the present application are intended to cover a non-exclusive inclusion.

In the description of the embodiments of the present application, if appearing, the technical terms "first", "second", and the like are used only for distinguishing between different objects, but cannot be construed to indicate or imply relative importance or implicitly indicate the number, specific order, or primary/secondary relationship of indicated technical features. In the description of the embodiments of the present application, "a plurality of" means two or more unless specifically defined otherwise.

Reference to "an embodiment" herein means that a particular feature, structure, or characteristic described with reference to the embodiment can be included in at least one embodiment of the present application. The phrase in various places in the description does not necessarily all refer to the same embodiment, or a separate or alternative embodiment mutually exclusive of other embodiments. It is explicitly and implicitly understood by a person skilled in the art that the embodiments described herein may be combined with other embodiments.

In the description of the embodiments of the present application, the term "a plurality of" refers to more than two (including two).

In the description of the embodiments of the present application, if appearing, the orientation or positional relationships indicated by technical terms such as "central portion", "length", "width", "thickness", "upper", "lower", "inner", and "outer" are based on the orientation or positional relationships shown in the accompanying drawings. These terms are only used to facilitate the description of the embodiments of the present application and simplify the description, and do not indicate or imply that the referred device or element must have a specific orientation, be constructed and operated in a specific orientation. Therefore, they shall not be construed as limitations on the embodiments of the present application.

In the description of the embodiments of the present application, unless otherwise specified and defined explicitly, if appearing, the terms "mount", "connect", "join", and "fasten" should be understood in their general senses. For example, they may refer to a fixed connection, a detachable connection, or an integral connection, may refer to a mechanical connection or electrical connection, and may refer to a direct connection, an indirect connection via an intermediate medium, or an internal communication between two elements or interaction between two elements. A person of ordinary skill in the art may understand the specific meanings of the above terms in the embodiments of the present application according to specific situations.

A battery cell serves as a core unit in a battery, and a structure and performance of the battery cell have a crucial influence on performance and a service life of the entire battery. In the structure of the battery cell, an electrode sheet is an important component therein, and the electrode sheet is generally wound together to reduce volume and increase energy density. However, some problems are generally encountered when the electrode sheet is wound, such as inner layer collapse and outer layer breakage. These problems will affect performance of the electrode sheet and stability of the battery cell and the battery.

In a production process of the battery cell, as the electrode sheet is wound, different layers of the electrode sheet are subjected to a compressive stress and slip, causing an inner layer of the electrode sheet to become tighter and tighter when the electrode sheet is wound. That is, in the electrode sheet after being wound, a spacing between the inner layer of the electrode sheet and an adjacent layer is less than a spacing between an outer layer of the electrode sheet and an adjacent layer. Therefore, the inner layer of the electrode sheet after being wound is more likely to collapse due to action of the compressive stress, which may lead to a risk such as battery performance degradation or battery thermal runaway. After the electrode sheet is wound, the outer layer of the electrode sheet is subjected to an expansion force of the inner layer and is prone to breakage.

In some cases, during actual testing or use of the battery cell, the electrode sheet may be expanded due to heat. Therefore, collapse of the inner layer and breakage of the outer layer of the electrode sheet will be exacerbated.

In order to improve structural stability of the electrode sheet, embodiments of the present application provide a battery cell, including an electrode assembly. The electrode assembly includes an electrode sheet and a plurality of bosses; the electrode sheet is of a wound structure; and the plurality of bosses are at least partially disposed on the electrode sheet in the winding direction of the electrode sheet.

In the electrode sheet provided by the embodiments of the present application, by providing the plurality of bosses on the electrode sheet, after the electrode sheet is wound, the bosses can achieve a supporting effect between two adjacent layers of the wound structure, and facilitate an increase in a distance between two adjacent layers of the wound structure. That is, the plurality of bosses can enable two adjacent layers of the wound structure to be looser, to facilitate reduction of the occurrence of breakage of the electrode sheet.

The battery involved in the embodiments of the present application can be used in an electrical device using a battery as a power supply or various energy storage systems using a battery as an energy storage element. The electrical device may be, but is not limited to, a vehicle, a cell phone, a portable device, a notebook computer, a ship, a spacecraft, an electric toy, an electric tool, or the like. The vehicle may be a battery electric vehicle, a hybrid vehicle, a range-extended electric vehicle, or the like. The spacecraft includes aircrafts, rockets, space shuttles, spaceships, and the like. The electric toy includes stationary or mobile electric toys, such as game machines, electric car toys, electric ship toys, electric airplane toys, and the like. The electric tool may include metal cutting electric tools, grinding electric tools, assembly electric tools, and electric tools for railways, such as electric drills, electric sanders, electric wrenches, electric screwdrivers, electric hammers, impact drills, concrete vibrators, electric planers, and the like.

For ease of description, the following embodiments are described by using an example in which an electrical device in some embodiments of the present application is a vehicle.

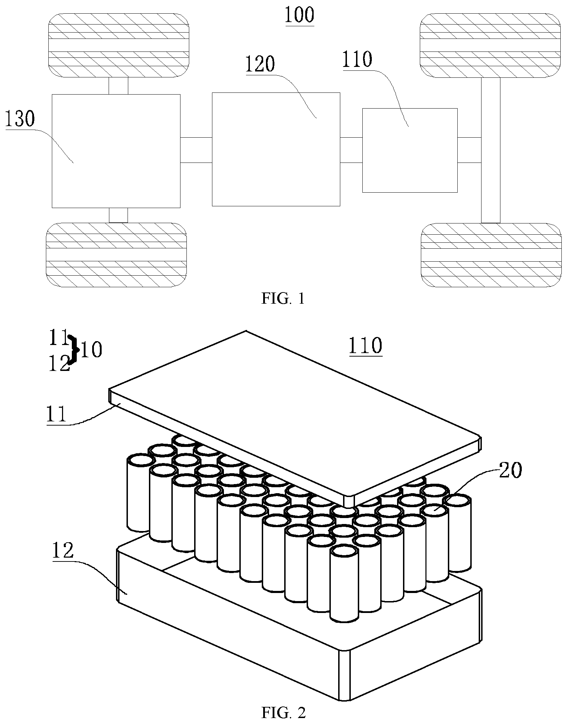

Referring to FIG. 1, FIG. 1 is a schematic structural diagram of a vehicle 100 according to embodiments of the present application. A battery 110 is provided inside the vehicle 100. The battery 110 may be disposed at a bottom, head, or tail of the vehicle 100. The battery 110 may be configured to power the vehicle 100. For example, the battery 110 may be used as an operating power source of the vehicle 100. The vehicle 100 may further include a controller 120 and a motor 130. The controller 120 is configured to control the battery 110 to power the motor 130, for example, for a working power requirement of the vehicle 100 during starting, navigating, and traveling.

In some embodiments of the present application, the battery 110 may be used not only as the operating power source of the vehicle 100, but also as a driving power source of the vehicle 100, instead of or partially instead of fuel or natural gas to provide driving power for the vehicle 100.

Referring to FIG. 2, FIG. 2 is a schematic exploded view of a battery according to embodiments of the present application. The battery 110 includes a box body 10, a battery cell 20, and a power distribution device. The battery cell 20 is accommodated in the box body 10 of the battery. The box body 10 is configured to provide an accommodating space for the battery cell 20, and the box body 10 may adopt various structures. In some embodiments, the box body 10 may include a first portion 11 and a second portion 12, where the first portion 11 and the second portion 12 fit to each other to define an accommodation space for accommodating the battery cell 20. The second portion 12 may be of a hollow structure with an opening at one end, the first portion 11 may be of a plate-shaped structure, and the first portion 11 covers an opening side of the second portion 12, such that the first portion 11 and the second portion 12 jointly define the accommodating space. The first portion 11 and the second portion 12 may each be of a hollow structure with an opening on one side, with the opening side of the first portion 11 covering the opening side of the second portion 12. Certainly, the box body 10 formed by the first portion 11 and the second portion 12 may be in various shapes such as a cylinder and a cuboid. In some embodiments, the box body 10 may be a portion of a bottom structure of a vehicle body. For example, a portion of the box body may be at least a portion of a floor of the vehicle body, or a portion of the box body may be at least a portion of a cross beam and a longitudinal beam of the vehicle body. In the battery 110, a plurality of battery cells 20 may be provided, and the plurality of battery cells 20 may be subjected to series connection, parallel connection, or series-parallel connection. The series-parallel connection means that the plurality of battery cells 20 are subjected to both series connection and parallel connection.

In some embodiments, the plurality of battery cells 20 may be directly connected in series, in parallel, or in a combination of both, and the whole composed of the plurality of battery cells 20 is accommodated in the box body 10. Certainly, the battery 110 may also be formed in a manner that the plurality of battery cells 20 are subjected to series connection, parallel connection, or series-parallel connection to form battery modules, and the plurality of battery modules are then subjected to series connection, parallel connection, or series-parallel connection to form a whole, which is accommodated in the box body 10. The battery 110 may further include other functional components. For example, the battery 110 may further include a busbar component for implementing an electrical connection between the plurality of battery cells 20. Each battery cell 20 may be a secondary battery or a primary battery, or may be a lithium-sulfur battery, a sodium-ion battery, or a magnesium-ion battery, but is not limited thereto. The battery cell 20 may be cylindrical, flat, cuboid, or other shapes. The secondary battery refers to a battery cell that may be continuously used by activating an active material by means of charging the battery cell after the battery cell is discharged. The primary battery refers to a battery cell that may not be continuously used by activating an active material by means of charging the battery cell after the electrical energy of the battery cell is depleted. The battery cell may also be a lithium-ion battery, a sodium-ion battery, a sodium-lithium ion battery, a lithium metal battery, a sodium metal battery, a lithium-sulfur battery, a magnesium-ion battery, a nickel-hydrogen battery, a nickel-cadmium battery, a lead storage battery, or the like, which is not limited herein. The battery cell may be a cylindrical battery cell, a prismatic battery cell, a pouch battery cell, or a battery cell with another shape. The prismatic battery cell includes a square-housing battery cell, a blade-shaped battery cell, and a multi-prism battery cell, for example, a hexagonal prism battery cell, and the like, which is not particularly limited by the present application.

The power distribution device is a device for distributing electrical energy to various electrical appliances in the vehicle. The power distribution device may be a high-voltage power distribution device, that is, the power distribution device is configured to distribute electrical energy to a high-voltage electrical appliance, and the high-voltage electrical appliance may be, but is not limited to, an electric drive device or the like. The power distribution device may alternatively be a low-voltage power distribution device, that is, the power distribution device is configured to distribute electrical energy to low-voltage electrical appliances, and the low-voltage electrical appliances may be, but are not limited to, instrument panels, vehicle lights, power seats, and the like. The power distribution device includes a fixing component, and the fixing component is configured to fix a pre-charging resistor.

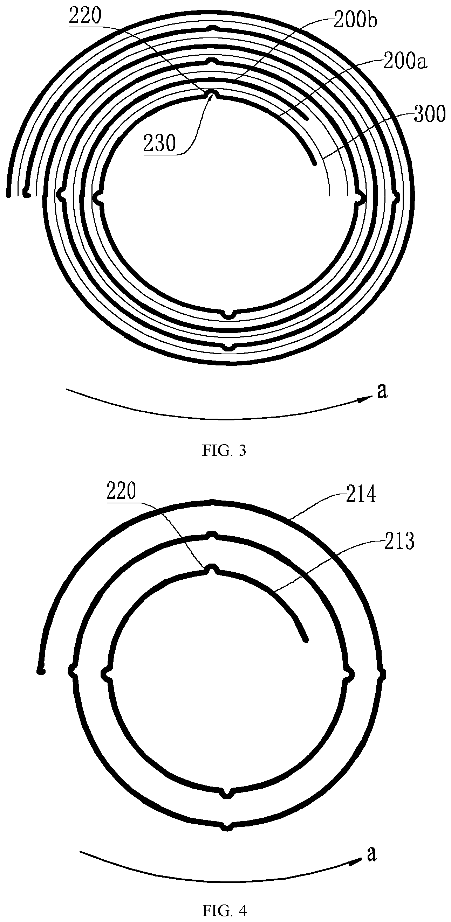

In some embodiments, referring to FIG. 3, FIG. 3 is a schematic structural diagram of an electrode assembly 200 according to the embodiments. The electrode assembly 200 in this embodiment is a bare cell of a cylindrical battery cell 20. The electrode assembly 200 includes a positive electrode sheet 200a and a negative electrode sheet 200b, and the positive electrode sheet 200a and/or the negative electrode sheet 200b are or is formed by winding an electrode sheet 210. In a further embodiment, a separator 300 is provided between the positive electrode sheet 200a and the negative electrode sheet 200b.

The following describes the battery cell 20 provided in the embodiments of the present application with reference to the accompanying drawings.

Referring to FIG. 3, the embodiments of the present application provide a battery cell 20, including an electrode assembly 200. The electrode assembly 200 includes an electrode sheet 210 and a plurality of bosses 220; the electrode sheet 210 is of a wound structure; and the plurality of bosses 220 are at least partially disposed on the electrode sheet 210 in the winding direction a of the electrode sheet 210.

It can be understood that the electrode sheet 210 may generally be a positive electrode sheet 200a and a negative electrode sheet 200b. The positive electrode sheet 200a is composed of a positive current collector and a positive coating layer; and the negative electrode sheet 200b is composed of a negative current collector and a negative coating layer. The current collector mainly functions to carry an electrode active material, collect and output a current generated by the active material, and input an electrode current to the active material. In the technical solutions of the embodiments of the present application, the electrode sheet 210 is a positive electrode sheet 200a. The thickness direction may be a direction from an upper surface of the electrode sheet to a lower surface thereof or a direction from a lower surface of the electrode sheet to an upper surface thereof when the electrode sheet 210 is in a laid state.

For example, positive and negative coating layers are composed of active material powder, a conductive agent, a binder, and other auxiliary agents. The active material refers to a positive/negative electrode material that participates in an electrochemical oxidation/reduction reaction. The conductive agent plays a role in collecting micro-current (maintaining electrical contact) between active material particles and between active material particles and a current collector, thereby improving electronic conductivity, reducing a contact resistance of an electrode, reducing polarization of the electrode, and promoting wetting of electrolyte solution into the electrode sheet. The binder can bind the active material powder together, enhance electronic contact between the electrode active material and the conductive agent and between the active material and the current collector, and better stabilize a structure of the electrode sheet.

It can be understood that "the electrode sheet 210 is of a wound structure" means that the electrode sheet 210 can be wound to save space. For example, the electrode sheet 210 is made of a bendable material, and can be easily wound or folded, so that the electrode sheet 210 can be wound in a process of manufacturing a cell. The winding direction a is a direction from a head end where the electrode sheet 210 starts to be wound to a trail end where the electrode sheet is finally wound. The electrode plate is similar to a "measuring tape" structure. The measuring tape is of a windable structure, the measuring tape is in an extended state during measurement, and the measuring tape is wound in the winding direction a after the measurement is completed, so as to return to a wound state. In the embodiments of the present application, the winding direction a is defined as the length direction c of the electrode sheet 210. That is, the winding direction a is perpendicular to the thickness direction of the electrode sheet 210. The height of the boss 220 refers to a protruding height of the boss 220 in the thickness direction of the electrode sheet 210.

In the technical solutions of the embodiments of the present application, by providing the plurality of bosses 220 on the electrode sheet 210, after the electrode sheet 210 is wound, the bosses 220 can achieve a supporting effect between two adjacent layers of the wound structure, and facilitate an increase in a distance between two adjacent layers of the wound structure. That is, the plurality of bosses 220 can be distributed between two adjacent layers to support the two adjacent layers at a plurality of points, so that a gap can be formed between the two adjacent layers, which helps alleviate a compressive force between the two adjacent layers, thereby facilitating reduction of the occurrence of breakage of the electrode sheet 210 due to the compressive force.

In some embodiments, referring to FIG. 4, the wound structure has an inner layer 213 and an outer layer 214, and the plurality of bosses 220 are disposed on the inner layer 213.

It should be explained that the inner layer 213 refers to one or more layers of structures closer to an axial line in a multilayer structure of the wound structure after the electrode sheet 210 is wound along the axial line thereof to form the wound structure. Correspondingly, the outer layer 214 refers to one or more layers of structures farther away from the axial line of the wound structure.

It can be understood that after the wound structure is formed, due to compression action of the outer layer 214 on the inner layer 213, a spacing between the inner layer 213 and an adjacent layer is caused to decrease, thereby causing the inner layer 213 to be more prone to collapse. In the technical solutions of the embodiments of the present application, the plurality of bosses 220 are disposed on the inner layer 213. In this way, the bosses 220 can form a support between the inner layer 213 and an adjacent layer thereof to ensure a spacing between the inner layer 213 and the adjacent layer. That is, it can help enable the inner layer 213 of the wound structure and the adjacent layer to be looser, thereby facilitating reduction of a risk of collapse of the inner layer 213 of the electrode sheet 210.

In some embodiments, the boss 220 is of a deformable structure. In this way, in a process of forming the wound structure, the adjacent layer of the inner layer 213 compresses the bosses 220 on the inner layer 213, and as a quantity of wound layers increases, a compressive force of the adjacent layer on the bosses 220 increases. In this process, the bosses 220 gradually collapse and deform, so that the inner layer 213 and the adjacent layer thereof change from loose to tight.

In some embodiments, still referring to FIG. 3 and FIG. 4, in the winding direction aa of the electrode sheet 210, heights of the plurality of bosses 220 in the thickness direction of the electrode sheet 210 gradually decrease.

It should be explained that, as a quantity of layers of the wound structure increases and forms, a more inner layer of structure in the wound structure is subjected to a greater compressive force, and the spacing between the inner layer and the adjacent layer thereof also decreases. In the technical solution of this embodiment, heights of the bosses 220 in the winding direction a are set to gradually decrease. That is, the height of the boss 220 on the inner layer 213 is greater than the height of the boss 220 on the outer layer 214, and the boss 220 on the inner layer 213 is subjected to a greater compressive force, and thus the boss 220 on the inner layer 213 will undergo greater deformation. By setting the height of the boss 220 on the inner layer 213 to be greater than the height of the boss 220 on the outer layer 214, it helps ensure that the boss 220 on the inner layer 213 and the boss 220 on the outer layer 214 have the same height after deformation, thereby helping ensure that the inner layer 213 and the outer layer 214 have the same tightness, or that the inner layer 213 is looser than the outer layer 214, which facilitates reduction of a risk of collapse of the inner layer 213 of the electrode sheet 210.

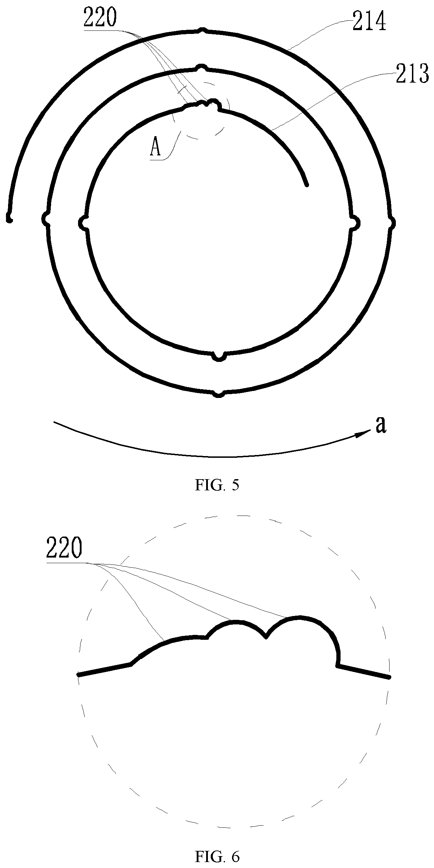

In some embodiments, still referring to FIG. 4, the plurality of bosses 220 are spaced apart from each other on the electrode sheet 210. In some other embodiments, referring to FIG. 5, FIG. 5 shows a schematic structural diagram of an electrode sheet according to this embodiment. The plurality of bosses 220 are sequentially connected in the winding direction to form a protruding strip structure.

In some embodiments, still referring to FIG. 3, there are a plurality of bosses 220 disposed in the winding direction a of the electrode sheet 210, and a quantity of bosses 220 is positively correlated with the length of the electrode sheet 210 in the winding direction a. It can be understood that the longer the length of the electrode sheet 210 is, the more tightly the bosses 220 are arranged. As the length of the electrode sheet 210 increases, a quantity of outer layers of the wound structure increases, and the inner layer will be subjected to a greater compressive stress. In this embodiment, a sufficient quantity of bosses 220 are provided in the winding direction a, which helps provide a more sufficient supporting action force when the inner layer is subjected to a greater compressive stress.

In some embodiments, still referring to FIG. 3, the plurality of bosses 220 are spaced apart in the winding direction a of the electrode sheet 210. It can be understood that by providing the plurality of bosses 220 to be arranged at intervals, it helps increase a space between two adjacent layers in the wound structure. That is, the plurality of bosses 220 are spaced apart, which can enable two adjacent layers of the wound structure to be looser, thereby facilitating reduction of the occurrence of breakage of the electrode sheet 210.

In some embodiments, still referring to FIG. 3, at least three bosses 220 are provided on each layer of electrode sheet 210 in the winding direction a of the electrode sheet 210, and a distance between two adjacent bosses 220 gradually increases in the winding direction a of the electrode sheet 210.

It should be explained that a distance between two adjacent bosses 220 gradually increasing in the winding direction a of the electrode sheet 210 means that a distribution density of the bosses 220 in the winding direction a decreases. It can be understood that a more inner layer of structure in the wound structure is subjected to a greater compressive force, and the spacing between the inner layer 213 and the adjacent layer thereof also decreases. By providing denser bosses 220 on the inner layer 213, it helps increase a support effect between the inner layer 213 and the adjacent layer thereof, thereby helping ensure a tightness degree of the inner layer 213.

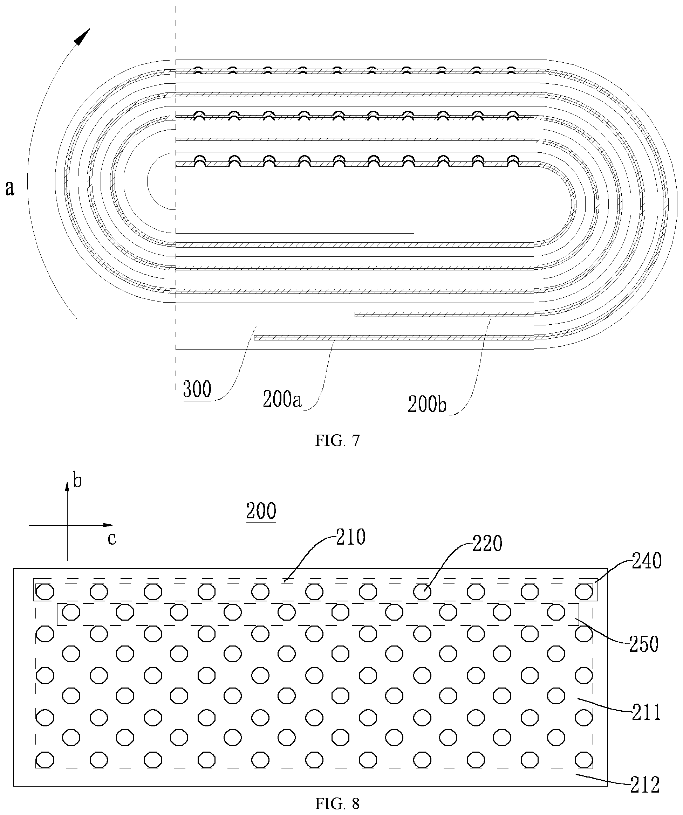

In some embodiments, referring to FIG. 7, FIG. 6 is an enlarged schematic diagram of part A in FIG. 5 according to this embodiment. At least some bosses in the plurality of bosses are connected to form a protruding strip, and a protruding height of the protruding strip gradually decreases in the winding direction of the electrode sheet.

In some embodiments, referring to FIG. 7, FIG. 7 shows a schematic structural diagram of a battery cell 20 according to this embodiment. The battery cell 20 in this embodiment is a square battery cell. A difference between the square battery cell and the cylindrical battery cell is that the electrode sheet after being wound has a different structural shape, an electrode sheet with the square battery cell is wound into a racetrack-shaped structure, and an electrode sheet with the cylindrical battery cell is wound into a circular structure. In this embodiment, there are at least three bosses 220, and the distance between two adjacent bosses 220 in the winding direction a of the electrode sheet 210 gradually increases.

In the technical solutions of the embodiments of the present application, the inner layer of the wound structure is subjected to a greater compressive force than the outer layer in the wound structure formed by the electrode sheet 210. Therefore, by setting the distance between two adjacent bosses 220 in the winding direction a of the electrode sheet 210 to gradually increase, that is, the bosses 220 on the inner layer of the wound structure are denser than those on the outer layer, which helps offset some of the compressive force brought to the inner layer by the outer layer, thereby helping improve support stability of the inner layer.

In some embodiments, still referring to FIG. 7, the electrode sheet 210 forms a wound structure after being wound, and the electrode sheet 210 is configured such that, in a case of forming the wound structure, as a quantity of layers of the wound structure increases, heights of the plurality of bosses 220 in the thickness direction of the electrode sheet 210 decrease.

It can be understood that the electrode sheet 210 can form a multi-layer wound structure after being wound, similar to a measuring tape structure. In the technical solutions of the embodiments of the present application, the heights of the plurality of bosses 220 in the thickness direction of the electrode sheet 210 are set to decrease as the quantity of layers of the wound structure increases. That is, in different layers, the bosses 220 located in a more outer layer have a smaller height, and the bosses 220 located in a more inner layer have a greater height. In this way, it helps enable the inner layer of the wound structure to be looser, and it helps reduce a risk of collapse of the inner layer of the electrode sheet 210. In addition, the outer layer of the wound structure can be enabled to be tighter, which helps make a structure of the electrode sheet 210 after being wound tighter, thereby helping reduce a space occupied by a structure of the electrode assembly 200.

In some embodiments, the electrode sheet 210 is configured such that, in the case of forming the wound structure, bosses 220 in the same layer of the wound structure have the same protruding height. In the technical solutions of the embodiments of the present application, for the wound structure after the electrode sheet 210 is wound, compressive forces on the same layer are substantially the same, and thus heights of bosses 220 on the same layer can be set to be the same.

In some embodiments, referring to FIG. 8, FIG. 8 shows a schematic structural diagram of an electrode assembly 200 according to this embodiment. The plurality of bosses 220 in this embodiment are arranged in the winding direction a to form a first boss column 240 and a second boss column 250, the first boss column 240 and the second boss column 250 are alternately arranged in the width direction b of the electrode sheet 210, and bosses in the first boss column 240 and bosses in the second boss column 250 are staggered in the width direction b.

It can be understood that a boss column refers to a set formed by a plurality of bosses 220 arranged in a specific direction. In this way, by providing the first boss column 240 and the second boss column 250, it helps improve consistency of a spacing between two adjacent layers of the wound structure in the width direction b of the electrode sheet 210, thereby helping improve structural stability of the electrode sheet 210 after being wound.

Projections of the bosses 220 in the first boss column 240 in the width direction b and projections of the bosses 220 in the second boss column 250 in the width direction b are staggered, which helps improve support stability of the first boss column 240 and the second boss column 250 on other layer structures, thereby helping improve structural stability of the electrode sheet 210 after being wound.

In some embodiments, a quantity of bosses 220 in different boss 220 columns is the same. In some other embodiments, a quantity of bosses 220 in different boss 220 columns differs.

In some embodiments, the bosses in the first boss column 240 and the bosses in the second boss column 250 are arranged in a grid structure, which helps improve support stability of the first boss column 240 and the second boss column 250 on other layer structures, thereby helping improve structural stability of the electrode sheet 210 after being wound.

In some embodiments, a shape of a minimum grid unit of the grid structure is an isosceles triangle.

In some embodiments, still referring to FIG. 8, the width direction b is perpendicular to the winding direction a.

In some embodiments, still referring to FIG. 3, the boss 220 is implemented by providing a groove 230 on one side of the electrode sheet 210, and the groove 230 is disposed to extend in the thickness direction of the electrode sheet 210 to form the boss 220 on the other side of the electrode sheet 210. For example, a groove 230 can be pressed into one side of the electrode sheet 210 by using a pressing roller, while a boss 220 is formed on the other side.

In some embodiments, there are a plurality of grooves 230, and the grooves 230 are disposed corresponding to the bosses 220. In this way, each boss 220 is formed in a form of pressing the groove 230, which helps simplify processing difficulty.

In some embodiments, the boss 220 has an abutting surface disposed facing away from the electrode sheet 210, and at least a portion of the abutting surface is a curved surface.

It can be understood that after the wound structure is formed, an abutting surface of the boss 220 on the inner layer 213 abuts against a plane of the adjacent layer, and by providing at least a portion of the abutting surface to be a curved surface, it helps reduce a pressure of the boss 220 on the other layer of the wound structure to improve structural strength of the wound structure.

In some embodiments, the curved surface is an arc surface. More specifically, the boss 220 is a portion formed by cutting a spherical structure along a certain plane.

In some embodiments, still referring to FIG. 8, the electrode sheet 210 is provided with a preset region 211 for arranging the boss 220, and a spacing region 212 is provided between the boundary of the preset region 211 and the boundary of the electrode sheet 210. In this way, by reserving the spacing region 212 for cutting, it helps avoid generating more metal burrs when cutting the electrode sheet 210. That is, if a cutting route is provided on the boss 220 when the electrode sheet 210 is cut, more metal burrs may be generated.

In some embodiments, the spacing region 212 between the boundary of the preset region 211 and the boundary of the electrode sheet 210 is between 10 mm and 25 mm. Specifically, the width of the spacing region 212 is between 15 mm and 20 mm.

Referring to FIG. 3, FIG. 7, and FIG. 8, the embodiments of the present application provide a battery cell 20, and the battery cell 20 includes an electrode assembly 200. The electrode assembly 200 includes an electrode sheet 210 and a plurality of boss columns, and the plurality of boss 220 columns are disposed on the electrode sheet 210 in the width direction b of the electrode sheet 210. The boss 220 column includes a plurality of bosses 220 disposed in the length direction c of the electrode sheet 210. Specifically, the boss 220 is a protruding structure formed correspondingly on the other side by providing a groove 230 on one side of the electrode sheet 210. In the winding direction a of the electrode sheet 210, heights of the plurality of bosses 220 in the thickness direction of the electrode sheet 210 gradually decrease. A side of the boss 220 facing away from the electrode sheet 210 is a partial spherical structure.

It can be understood that, in the embodiments of the present application, the wound structure is formed after the electrode sheet 210 is wound, and a gap can be formed between two adjacent layers of the wound structure through the boss 220, so as to reduce a collapse risk of the inner layer and a breakage risk of the outer layer.

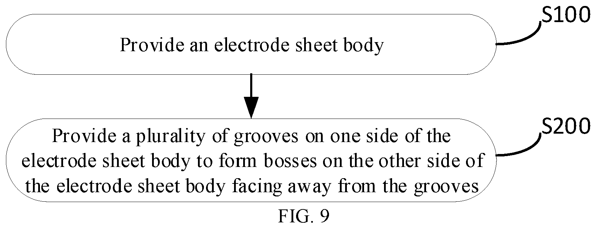

According to a second aspect, referring to FIG. 9, FIG. 9 shows a step schematic diagram of a preparation method for an electrode assembly 200 according to this embodiment. The present application further provides a preparation method for a battery cell, which is used to prepare the battery cell in any of the above embodiments. The preparation method includes:

S100: Providing an electrode sheet 210. Specifically, a pre-pressing portion is provided on the electrode sheet 210, and a boss 220 is formed by processing the pre-pressing portion.

S200: Using an embossing roller to roll on one side of the electrode sheet 210 and pressing a plurality of grooves 230 on the electrode sheet 210 to form a boss 220 on the other side of the electrode sheet 210 facing away from the grooves 230, where a pressure of the embossing roller on the electrode sheet 210 gradually increases or decreases in a rolling direction of the embossing roller on the electrode sheet 210. Specifically, pressing is performed toward a position of the pre-pressing portion on the electrode sheet 210 to form the boss 220 on the other side of the electrode sheet 210.

More specifically, a depth of the groove 230 is adjusted by adjusting a pressure of the embossing roller, thereby adjusting the height of the boss 220. For example, a groove 230 with a greater depth can be pressed by increasing the pressure of the embossing roller, so as to obtain a boss 220 with a greater height. Alternatively, a groove 230 with a smaller depth can be pressed by decreasing the pressure of the embossing roller, so as to obtain a boss 220 with a smaller height.

In some embodiments, the pressure of the embossing roller can be automatically adjusted by providing an electrical proportional valve.

In some specific embodiments, the battery cell 20 is a cylindrical battery cell 20, the wound structure is wound to form a cylindrical structure with a diameter of 46 mm, a first boss and a second boss are two adjacent bosses on the same ring, an included angle between a line connecting the first boss and a circle center and a line connecting the second boss and a circle center is 18°, and the height of the boss 220 is 1.3 mm. An air cylinder with a cylinder diameter of 25 mm is used, and during a rolling process in the winding direction a, a cylinder pressure of the air cylinder is adjusted from a first pressure to a second pressure. The first pressure is between 0.4 MPa and 0.45 MPa and the second pressure is between 0.27 MPa and 0.32 MPa.

In some embodiments, pressure sensors are respectively provided at two ends of the embossing roller, and parallelism of the embossing roller is adjusted by the pressure sensors to ensure consistency of heights of the bosses 220 in the width direction b of the electrode sheet 210.

In some embodiments, the battery cell 20 includes a positive electrode sheet 200a and a negative electrode sheet 200b, and the positive electrode sheet 200a and/or the negative electrode sheet 200b are formed by winding the foregoing electrode sheet 210.

In some embodiments, a separator 300 is provided between the positive electrode sheet 200a and the negative electrode sheet 200b, and the separator 300 achieves an insulation effect between the positive electrode sheet 200a and the negative electrode sheet 200b to isolate a positive electrode and a negative electrode, so that electrons inside the battery cell 20 cannot freely pass through, thereby preventing a short circuit. In an exemplary illustration, the separator 300 is a porous plastic film, which can allow lithium ions in the electrolyte to freely pass through, thereby forming a circuit between the positive electrode and the negative electrode.

According to a third aspect, the present application further provides a battery 110. The battery 110 includes the foregoing battery cell 20. In some embodiments, the battery 110 includes a housing, a plurality of cavities are provided on the housing, and each cavity is provided with a plurality of battery cells 20.

According to a fourth aspect, the present application further provides an electrical device. The electrical device includes the foregoing battery 110. In some embodiments, the electrical device is a vehicle 100.

The technical features of the above-mentioned example may be combined, and all possible combinations of the technical features in the above-mentioned embodiments are not described for concise description, however, it should be regarded that the combinations of the technical features are with the range described in the present description as long as there is no inconsistency.

The above examples merely illustrate several implementations of the present application, which are described specifically and detailedly, but are not to be construed as limiting the scope of the patent application. It should be noted that for those of ordinary skill in the art, several variations and modifications may be made without departing from the concept of the present application, which are all within the protection scope of the present application. Therefore, the scope of patent protection of the present application shall be subject to the appended claims.

## Claims

1. A battery cell, comprising an electrode assembly, **characterized in that** the electrode assembly comprises:
an electrode sheet, wherein the electrode sheet is of a wound structure; and
a plurality of bosses, wherein the plurality of bosses are at least partially disposed on the electrode sheet in a winding direction of the electrode sheet.

2. The battery cell according to claim 1, wherein the wound structure has an inner layer and an outer layer, and the plurality of bosses are disposed on the inner layer.

3. The battery cell according to claim 1 or 2, wherein the boss is of a deformable structure.

4. The battery cell according to any one of claims 1 to 3, wherein in the winding direction of the electrode sheet, protruding heights of the plurality of bosses in the thickness direction of the electrode sheet gradually decrease.

5. The battery cell according to any one of claims 1 to 4, wherein the plurality of bosses are spaced apart in the winding direction of the electrode sheet.

6. The battery cell according to claim 5, wherein at least three bosses are provided on each layer of electrode sheet in the winding direction of the electrode sheet, and a distance between two adjacent bosses gradually increases in the winding direction of the electrode sheet.

7. The battery cell according to any one of claims 1 to 6, wherein at least some bosses in the plurality of bosses are connected to form a protruding strip, and a protruding height of the protruding strip gradually decreases in the winding direction of the electrode sheet.

8. The battery cell according to any one of claims 1 to 7, wherein the plurality of bosses are arranged in the winding direction to form a first boss column and a second boss column, the first boss column and the second boss column are alternately arranged in the width direction of the electrode sheet, and bosses in the first boss column and bosses in the second boss column are staggered in the width direction.

9. The battery cell according to claim 8, wherein the bosses in the first boss column and the bosses in the second boss column are arranged in a grid structure.

10. The battery cell according to any one of claims 1 to 9, wherein the electrode sheet is configured such that bosses in the same layer of the wound structure have the same protruding height.

11. The battery cell according to any one of claims 1 to 9, wherein the bosses are disposed on the same side of the electrode sheet, and a groove is provided at the position on the other side of the electrode sheet corresponding to the bosses.

12. The battery cell according to any one of claims 1 to 9, wherein the boss has an abutting surface disposed facing away from the electrode sheet, and at least a portion of the abutting surface is a curved surface.

13. The battery cell according to claim 12, wherein the curved surface is an arc surface.

14. The battery cell according to any one of claims 1 to 9, wherein the electrode sheet is provided with a preset region for arranging the boss, and a spacing region is formed between the boundary of the preset region and the boundary of the electrode sheet.

15. A preparation method for a battery cell, **characterized by** comprising:
providing an electrode sheet; and
using an embossing roller to roll on one side of the electrode sheet and pressing a plurality of grooves on the electrode sheet to form a boss on the other side of the electrode sheet facing away from the grooves, wherein a pressure of the embossing roller on the electrode sheet gradually increases or decreases in a rolling direction of the embossing roller on the electrode sheet.

16. The preparation method for a battery cell according to claim 15, wherein the electrode sheet is configured such that, in the direction from an inner layer to an outer layer of a wound structure, protruding heights of a plurality of bosses in the thickness direction of the electrode sheet gradually decrease.

17. A battery, **characterized by** comprising the battery cell according to any one of claims 1 to 16.

18. An electrical device, **characterized by** comprising the battery according to claim 17.
